# EUROPEAN PATENT SPECIFICATION

(11) **EP 1 079 156 B1**
(45) Date of publication and mention of the grant of the patent: **13.05.2009**
(21) Application number: 00306996.0
(22) Date of filing: 16.08.2000
(51) Int. Cl.: F16J 15/34

(54) **Non-contact type mechanical seal**
Berührungsfreie, mechanische Dichtung
Joint mécanique sans contact

(30) Priority: 16.08.1999 JP 22960199
(43) Date of publication of application: 28.02.2001
(73) Proprietor: NIPPON PILLAR PACKING CO., LTD., Osaka (JP)
(72) Inventor: Fuse, Toshihiko c/o Nippon Pillar Packing Co., Ltd., Sanda-shi, Hyogo-ken (JP); Okumachi, Eiji c/o Nippon Pillar Packing Co., Ltd., Sanda-shi, Hyogo-ken (JP)
(74) Representative: Crump, Julian Richard John

(56) References cited:
- EP-A- 0 438 346
- EP-A- 0 466 076
- EP-A- 0 597 148
- EP-A- 0 601 821
- EP-A- 0 684 413
- WO-A-99/31412
- DE-A- 3 925 404
- US-A- 5 421 593
- US-A- 5 722 665
- PATENT ABSTRACTS OF JAPAN vol. 1997, no. 05, 30 May 1997 (1997-05-30) & JP 09 004720 A (NIPPON PILLAR PACKING CO LTD), 7 January 1997 (1997-01-07)
- PATENT ABSTRACTS OF JAPAN vol. 1997, no. 11, 28 November 1997 (1997-11-28) & JP 09 196184 A (NIPPON PILLAR PACKING CO LTD), 29 July 1997 (1997-07-29)

## Description

The present invention relates to a static pressure, non-contact type, mechanical seal suitable for use in rotary machines such, for example, as turbines, blowers, compressors, agitators, and rotary valves for handling a variety of gases including poisonous gases, inflammable gasses, explosive gases and powder-mixed gases.

A known non-contact, mechanical seal comprises a stationary ring fixed on a seal case, a spring retainer provided on a rotary shaft, a rotary seal ring mounted on the rotary shaft to be movable in the axial direction and held between the stationary seal ring and the spring retainer, with O-rings placed as a secondary seal for sealing the space between the rotary shaft and the rotary seal ring, seal gas supply passages that pass through the stationary seal ring and supply a gas - under a higher pressure than the fluid to be sealed - between opposed seal end faces of the two seal rings, and spring members, placed between the rotary seal ring and the spring retainer, pressing the rotary seal ring against the stationary seal ring, wherein the two seal rings are relatively rotated with the opposed seal end faces held in a non-contacting state by the seal gas supplied therebetween, thereby producing a seal between the inner and outer circumferential regions of the relatively rotating parts, that is, the sealed fluid region and the outside region (usually, the atmospheric region).

In a non-contact-type mechanical seal of such a construction, a static pressure fluid film of the seal gas is formed between the two seal end faces, and the presence of this fluid film holds the two seal rings in a non-contacting state, that is, keeps the two seal rings only slightly spaced from each other. The seal gas supplied between the two seal end faces is under a higher pressure than the fluid to be sealed. Therefore, the seal gas leaks out to the sealed fluid region and the outside region, but the sealed fluid cannot enter between the two seal end faces. Thus, the sealed fluid is sealed and prevented from leaking out to the outside region. The shaft can thus be sealed in a rotary machine handling such fluids as poisonous gases, inflammable gases and explosive gases that must not leak out.

WO 99/031412 discloses a mechanical face seal for providing scaling between a housing and a rotatable shaft. The seal comprises a first seal ring, a second seat ring, a gland housing and a generally fluidic pressure feedback network

In such static pressure, non-contact-type, mechanical seals, a self-excited vibration, called "pneumatic hammer", inevitably arises between the two opposing seal end faces, because the seal gas supplied from the seal gas supply passages to the seal end faces is a compressed gas. While the stationary seal ring clamped on the seal case is not affected by that, the rotary seal ring that is held on the rotary shaft merely by the O-rings vibrates with a minute amplitude as small as or smaller than the gap between the seal end faces. The vibration of the rotary seal ring has no particular adverse effect on the sealing function of the non-contact-type, mechanical seal, but it is desirable that the vibration should be prevented so as not to produce unwanted vibration noises.

It is hence an object of the present invention to provide a static pressure, non-contact-type, mechanical seal in which pneumatic hammering is reduced as far as possible or eliminated.

According to one aspect of the present invention, therefore, there is provided a non-contact mechanical seal for making a substantially fluid-tight seal around a rotatory shaft; said seal comprising a seat case; a rotary shaft that extends through said seal case and is adapted for rotation in relation thereto; a first stationary sealing ring having a first sealing face, which first sealing ring is fixedly secured within said seal case around said shaft, spring retaining means fixedly secured to said shaft; a second rotatory sealing ring having a second sealing face that opposes said first sealing face, which second sealing ring is mounted over said shaft between the first stationary seal ring and said spring retaining means; connecting means for connecting said second sealing ring to said shaft for rotation therewith whilst allowing said second sealing ring to move axially with respect to said shaft; spring means between said spring retaining means and said second sealing ring for urging the second sealing face towards said first sealing face; secondary sealing means for sealing between the second sealing ring and said shaft; and means for admitting a sealing fluid between said first and second sealing faces at a pressure greater than the pressure of the fluid to be sealed, whereby said sealing fluid urges said first and second sealing faces apart against the action of said spring means and seals the space between said first and second sealing faces; characterised by a sleeve member that is connected to the shaft for rotation therewith and is disposed around the second sealing ring; two axially spaced, elastic sealing ring members positioned between said sleeve member and said second sealing ring for sealing therebetween, which sealing ring members define an annular space between said sleeve member and said second sealing ring; abutment means on said second sealing ring and associated with each of said elastic sealing ring members and adapted to prevent axial movement of said elastic sealing members away from each other relative to said second sealing ring; and means for admitting a pressurised sealing fluid into said annular space for compressing said elastic sealing ring members axially against said abutment means, thereby to expand said sealing ring members radially, thereby holding said second sealing ring firmly within said sleeve member to reduce substantially pneumatic hammering of said second sealing ring.

Said sealing fluid may be selected according to the required sealing conditions.

Preferably, the sealing fluid should be harmless, even if it leaks into the region to be sealed or out of the seal, and should have no adverse effects on the fluid to be sealed. Said sealing fluid is preferably a gas and, generally, clean nitrogen may be used; clean nitrogen is inert to a variety of substances and harmless to humans.

Said means for admitting pressurised sealing fluid into the annular space may comprise means for conducting sealing fluid from said space between the first and second sealing faces to the annular space. Said second sealing ring may be provided with a plurality of fluid-conducting passages, each of which extends between a first open end that opens onto the second sealing face and a second open end that opens into the annular space.

Said means for admitting sealing fluid between said first and second sealing faces may comprise a plenum between said seal case and said first sealing ring, means for supplying sealing fluid through the seal case to the plenum, and means for conducting said fluid through the first ring, from the plenum to a plurality of spaced openings formed in said first sealing face. Said plenum may be formed by a circumferential groove formed in an outer surface of the first stationary sealing ring, which outer surface is contiguous an inner surface of the seal cone to close said plenum. Said first stationary sealing ring may be clamped onto the seal case. Said means for conducting fluid through the first sealing ring may comprise one or more branched passageways that extend from the plenum to one or more of said openings in said first sealing face.

Said first sealing face may comprise one or more pressure-generating grooves. The or each groove may be circular or arc-shaped and may be formed substantially concentrically with the first sealing face. In some embodiments, a plurality of arc-shaped, substantially concentric, pressure-generating grooves may be provided, which grooves all have substantially the same radius and are arranged end-to-end in a discontinuous, annular configuration. The distance between adjacent grooves in the circumferential direction may be substantially the same as the width of each groove in the radial direction. Each of said arc-shaped recessed grooves may have the identical groove width and depth.

Preferably, said means for conducting sealing fluid through the first sealing ring communicate with each of said grooves.

The one open end of each fluid-conducting passage of the second sealing ring is preferably aligned with the or each pressure-generating groove in the first sealing face. Said one open end of each passageway may be circular or non-circular, but advantageously has a width in the radial direction of the second sealing face that is substantially the same or smaller than the width of the or each pressure-generating groove in the first sealing face.

Preferably, the pressure of the sealing gas between the first and second sealing faces is about 1.5 bar higher than the pressure of the fluid to be sealed. Said plenum may be connected to said means for conducting sealing fluid through the first sealing ring by constriction means such, for example, as an orifice, capillary or porous material having a reduced diameter. Said constriction means serve to prevent or hinder the back-flow of sealing fluid into the plenum in the event that the pressure of sealing fluid between the opposing sealing faces increases, for instance owing to a transient closing of the gap between the two sealing faces. By restricting the back-flow of sealing fluid through the sealing fluid supply system, the pressure of the sealing fluid within the passageways connecting the plenum to the first sealing face is increased, thus urging the sealing end faces apart again to restore a desirable separation of the first and second opposing sealing faces.

Thus, said sealing fluid may be admitted to the plenum at a pressure of about 1.0 to 3.0 bar greater than the pressure of the fluid to be sealed, such that the pressure between the sealing faces is 0.5 to 1.5 bar greater than the pressure of the fluid to be sealed.

Said elastic sealing ring members may be formed form a non-compressible, substantially isovolumetric, elastic material. In some embodiments, said elastic material may be selected from natural or synthetic rubbers. Thus, as each elastic sealing ring member is compressed by the sealing fluid in the axial direction against said abutment means, that is substantially parallel to the axis of rotation of the rotatory shaft, each sealing ring member expands slightly in the radial direction, that is substantially transverse to the longitudinal axis of the shaft, to hold the second sealing ring firmly within the sleeve member. Conveniently, each of said elastic sealing ring members may comprise an O-ring. Each of said O-rings may be accommodated in a respective circumferential groove formed in the outer surface of the second rotatory sealing ring.

Said sleeve member may comprise a hollow cylinder that is fixedly secured to or formed integrally with the spring retaining means.

Following is a description by way of example only with reference to the accompanying drawings of embodiments of the present invention.

### In the drawings:-

FIG.1 is a transverse sectional view of a non-contact-type, mechanical seal in accordance with the present invention.
FIG.2 is an enlarged view of part of FIG.1
FIG.3 is an axial, sectional view taken on line III - III in FIG.1
FIG.4 is another axial, sectional view taken on line IV -IV in FIG.1

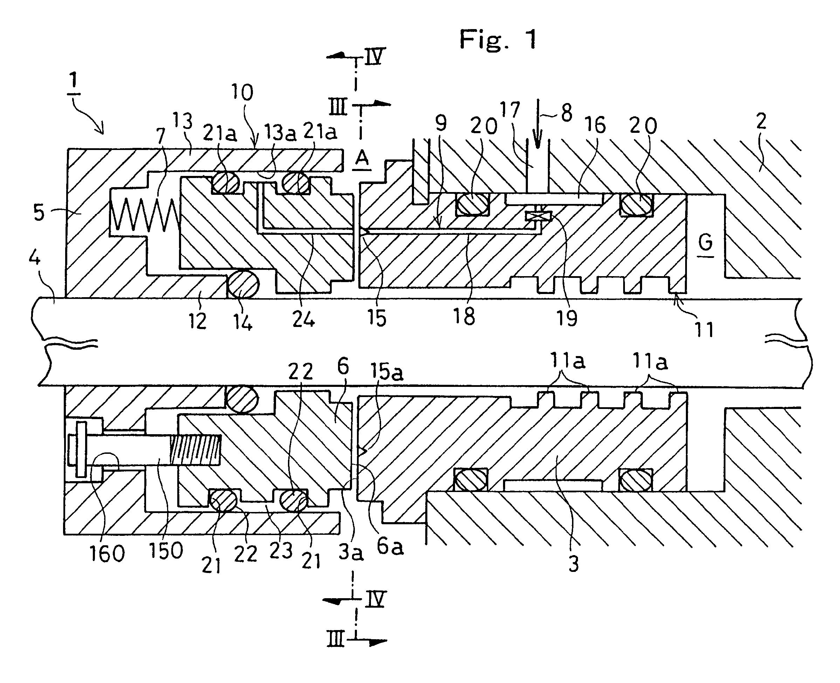

In the following description, it will be understood that the expressions "front", "before", "forward", and the like, mean left, and expressions "back", "rear", "backward" and the like, mean right in FIG.1.

As shown in FIG.1, a non-contact-type mechanical seal embodying the present invention comprises a stationary seal ring 3 clamped on a seal case 2, a spring retainer 5 fitted over and fixed on a rotary shaft 4 of a rotary machine, a rotary seal ring 6 fitted over and held on the rotary shaft 4 in a state movable in the axial direction (front-to-backward direction), spring members 7 that press the rotary seal ring 6 against the stationary seal ring 3, a seal gas supply system 9 to supply seal gas 8 between seal end faces 3a, 6a, that is, the opposed seal end faces of the two seal rings 3, 6, and a vibration preventing device 10 for preventing the vibration of the rotary seal ring 6, wherein the seal end faces 3a, 6a are relatively rotated in a non-contacting state, thereby producing a seal between the inner circumferential region of the relatively rotating parts, that is, the sealed fluid region G, and the outer circumferential region, that is the outside region A. It is noted that the sealed fluid region G communicates with the inside of the rotary machine, and is filled with a sealed fluid (e.g. a gas) while the outside region A is the atmospheric region outside the rotary machine.

The seal case 2 is substantially cylindrical in shape, with the rear end mounted on the rotary machine housing (not shown) in such a way that the rotary shaft 4 coaxially passes therethrough.

The stationary seal ring 3 is a ring-shaped body, and concentrically and loosely surrounds the rotary shaft 4 and is fitted into and fixed in an inner circumferential portion of the seal case 2 as shown in FIG.1. The seal end face 3a, or the front end of the stationary seal ring 3, (hereinafter referred to as stationary seal end face) is an annular, smooth surface and is substantially perpendicular to the axial line. A labyrinthine seal 11 is provided between the rear end portion of the stationary seal ring 3 and the rotary shaft 4. The labyrinthine seal 11 comprises a plurality of axially spaced annular protrusions 11a provided side-by-side on the inner circumferential surface of the stationary seal ring 3, the protrusions 11a extending close to the outer circumferential surface of the rotary shaft 4 as shown in FIG.1.

The spring retainer 5 is a ring-shaped body which is provided in front of the stationary seal ring 3 and fitted and fixed around the rotary shaft 4 as shown in FIG.1. In the inner and outer circumferential portions of the spring retainer 5, there are concentrically and respectively provided an annular O-ring abutment 12 and a cylindrical holder portion 13 that extends rearwards.

The rotary seal ring 6 is a ring-formed body with a rear end face 6a (hereafter referred to as rotary seal end face) formed into an annular smooth surface, substantially perpendicular to the axial line as shown in FIG.1. Provided between the stationary seal ring 3 and the spring retainer 5, the rotary seal ring 6 is fitted over and held on the rotary shaft 4 in a state movable in the axial direction with an O-ring 14 placed between the inner circumferential surface of the rotary seal ring 6 and the outer circumferential surface of the rotary shaft 4. The rotary seal ring 6, whilst being allowed to move by a specific amount in the axial direction, is prevented with respect to the shaft 4 and the retainer 5 from rotating by a rotation stopper pin 150 that is inserted in and engaged in an engaging hole 160 in the retainer 5. The rotation stopper pin 150 is screwed into the front end of the rotary seal ring 6.

The spring members 7 include a plurality of springs (only one spring is shown) placed between the spring retainer 5 and the rotary seal ring 6 as shown in FIG.1 and thrust the rotary seal ring 6 toward the stationary seal ring 3, generating a closing force that works to close the gap between the seal end faces 3a, 6a.

The seal gas supply system 9 comprises a series of seal gas supply passages 15, 16, 17, 18 formed in the seal case 2 and the stationary seal ring 3 and a squeezer 19 as shown in FIG.1 to FIG.3. The seal gas 8 under a higher pressure than the pressure Pg of the sealed fluid is supplied between the seal end faces 3a, 6a to produce a static pressure (opening force) that works to open the seal end faces 3a, 6a.

The seal gas supply passages include static pressure-generating grooves 15 formed on the stationary seal end face 3a, an annular communicating space 16 formed between an outer circumferential surface of the stationary seal ring 3 and an inner circumferential surface of the seal case 2 and a seal gas supply passage 18 on the seal ring side extending from the communicating space 16 to the static pressure-generating grooves 15 through the stationary seal ring 3.

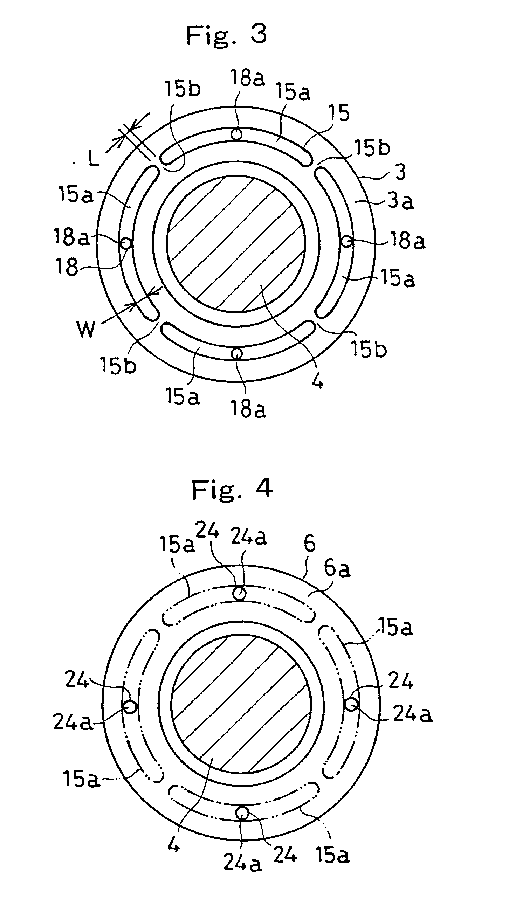

The static pressure-generating grooves 15 are a number of shallow, recessed grooves or a shallow, recessed, continuous groove formed concentrically with the stationary seal end face 3a in an annular form. In this example, separate grooves are formed. That is, the static pressure-generating grooves 15 are a plurality of arc-shaped recessed grooves 15a formed and disposed end-to-end in an annular form concentrically with the stationary seal end face 3a as shown in FIG.3. All the arc-shaped recessed grooves 15a are identical in groove width W and groove depth. More particularly, four arc-shaped recessed grooves 15a, all identical in shape, are formed on the stationary seal end face 3a at the same interval L. The length L in the circumferential direction between the adjacent arc-shaped recessed grooves 15a on the stationary seal end face portion 15b (hereinafter referred to as "inter-groove land portion") is set at the same or about the same as the groove width W of the static pressure-generating grooves 15. The communicating space 16 is sealed with O-rings 20 placed between the opposed circumferential surfaces of the seal case 2 and the stationary seal ring 3. The downstream end of the seal gas supply passage 18 branches out to the respective openings 18a of the arc-shaped recessed grooves 15a forming the static pressure-generating grooves 15. The upstream end of the seal gas supply passage 17 is connected to a seal gas source (not shown) from which the seal gas 8 is supplied to the static pressure-generating grooves 15 through the passage 17 on the seal case side, the communicating space 16 and the passage 18 on the seal ring side.

The seal gas 8 is selected according to sealing conditions. That is, the gas to selected should be harmless, even if the gas leaks out to the regions G, A and should have no adverse effects on the gas in the machine, that is, the sealed fluid. In this example, clean nitrogen gas is used that is inert to a variety of substances and harmless to humans. It is noted that the seal gas 8 is supplied only when the rotary machine is in operation (while the rotary shaft 4 is rotating), and the supply of the seal gas 8 is suspended when the machine is put out of operation. The rotary machine is started only after the seal gas 8 is supplied and the seal end faces 3a, 6a are held properly in a non-contact state. And the supply of the seal gas 8 is cut-off only after the rotary machine is put out of operation with the rotary shaft coming to a complete stop.

The squeezers 19 suitable for the purpose include orifices, capillary tubes and porous materials that have a squeezing function. The squeezer 19 is provided at a suitable point in the seal gas supply passage 18 - on the upstream side of the passage branching portion where the passage is branched out to communicate with the arc-shaped recessed grooves 15a.

If the seal gas 8 is supplied to the static pressure-generating grooves 15, the seal gas 8 led into the static pressure-generating grooves 15 produces an opening force to open the seal end faces 3a, 6a. This opening force is produced by a static pressure generated by the seal gas 8 led between the seal end faces 3a, 6a. Therefore, the seal end faces 3a, 6a are held in a non-contact state as an equilibrium is established between the opening force and the closing force (spring load) by the spring members 7 that work to close the gap between the seal end faces 3a, 6a. In other words, the seal gas 8 led into the static pressure-generating grooves 15 forms a static pressure fluid film between the seal end faces 3a, 6a. The presence of this fluid film produces a seal between the regions inside and outside the seal end face 3a, 6a, that is, the sealed fluid region G, and the outside region A. The pressure of the seal gas 8 and the spring force (spring load) of the spring members 7 are properly adjusted so that the gap between the seal end faces 3a, 6a is correct - generally 5 to 15 µm. In this connection, the seal gas 8 is squeezed by the squeezer 19 before being led into the static pressure-generating grooves 15. Therefore, even if the gap between the seal end faces 3a, 6a changes, the gap will automatically be adjusted to the correct size. That is, when the gap between the seal end faces 3a, 6a widens owing, for instance, to vibration of the rotary machine or the like, the equilibrium between the amount of the seal gas flowing in between the seal end faces 3a, 6a from the static pressure-generating grooves 15 and the amount of the seal gas supplied to the static pressure-generating grooves 15 through squeezer 19 is temporarily lost. As a result, the pressure within the static pressure-generating grooves 15 drops and the opening force is smaller than the closing force with the result that the gap between the seal end faces 3a, 6a decreases whereby the gap is adjusted to a proper size. If, on the other hand, the gap between the seal end faces 3a, 6a decreases, the pressure in the static pressure generating grooves 15 is increased by the squeezing function of the same squeezer 19 as mentioned above, and the opening force outdoes the closing force. As a result, the gap between the seal end faces 3a, 6a increases to restore the gap to a proper level.

For the reason to be described below, it is desirable that the pressure Ps (hereinafter referred to as "seal gas pressure") of the seal gas 8 supplied to the passage 17 on the seal case side from the seal gas supply source is controlled so that the pressure Pp in the respective arc-shaped recessed grooves 15a (hereinafter referred to as "pocket pressure") of the seal gas 8 led in the static pressure-generating grooves 15 from the seal gas supply passage 18 through the squeezer 19 is 0.5 to 1.5 bar higher than the sealed fluid pressure Pg. To put it another way, Pg + 0.5 bar ≤ Pp ≤ Pg +1.5 bar. The length L in the circumferential direction of the inter-groove land portion 15b between adjacent grooves on the stationary seal end face 3a is set at the same or about the same as the groove width W (groove width of the arc-shaped recessed grooves 15a) of the static pressure-generating grooves 15 as mentioned above. If Pp < Pg + 0.5 bar, then the pressure distribution of the fluid film formed by the seal gas 8 between the seal end faces 3a, 6a changes greatly in the area corresponding to the inter-groove land portion 15b. Then, the fluid film pressure in the area corresponding to the inter-groove land portion 15b drops below the sealed fluid pressure Pg, and there is a risk that the inside gas, or sealed fluid, can leak between the land portion 15b and the seal end face 6a out to the outside region A (atmospheric region). If, on the other hand, Pp > Pg + 1.5 bar then the leakage of the seal gas into the sealed fluid region G from the seal end faces 3a, 6a will increase more than necessary. In this example, therefore, the seal gas pressure Ps is set 1 to 3 bar higher than the sealed fluid pressure Pg (Pg + 1 bar ≤ Ps ≤ Pg + 3 bar) so that the pocket pressure Pp is maintained at Pg +0.5 bar ≤ Pp ≤ Pg +1.5 bar. When the sealed fluid pressure Pg, or the inside pressure, does not change, or changes only slightly, while the rotary machine is in operation (with the rotary shaft 4 rotating), the seal gas pressure Ps is kept constant such that Pg + 0.5 bar ≤ Pp ≤ Pg +1.5 bar and Pg + 1 bar ≤ Ps ≤ Pg + 3 bar. In case the sealed fluid pressure Pg changes greatly while the rotary machine is in operation, it can happen that the above conditions cannot be satisfied if the seal gas pressure Ps is kept constant. To cope with that, it is desirable to adjust and control the seal gas pressure Ps to satisfy the above conditions according to changes in the sealed fluid pressure Pg. That adjustment and control can be effected without difficulty by known control systems using a differential pressure regulating valve, for example. Needless to say, even if the change in the sealed fluid pressure Pg is small, the adjustment and control of the seal gas pressure Ps may be effected according to fluctuations in the sealed fluid pressure Pg. It is understood that the aforesaid pressures Pg, Pp, Ps are gauge pressures (bar) in relation to the atmosphere.

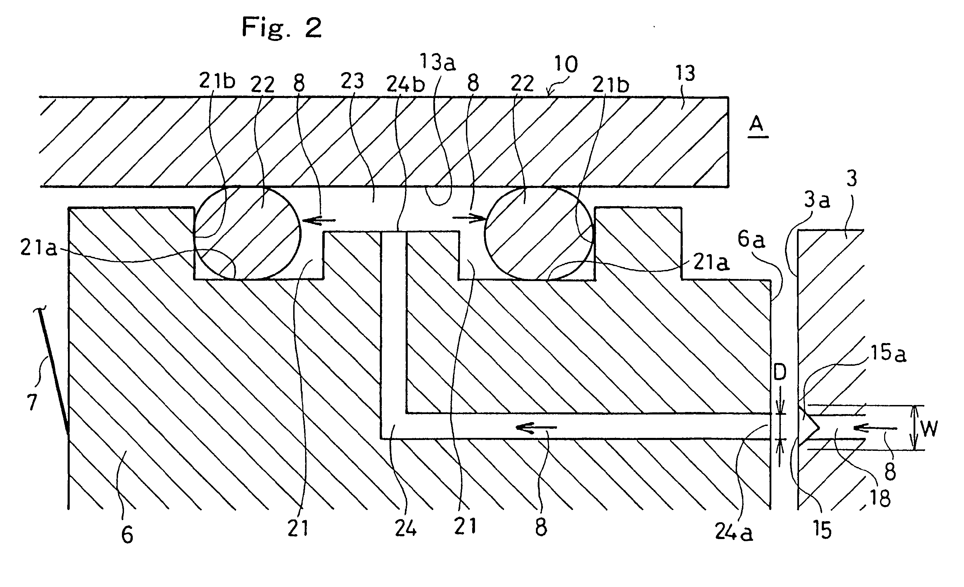

The vibration-preventing device 10 comprises, as shown in FIG.1 and FIG.2, the holder portion 13 of the spring retainer 5 that surrounds the outer circumferential portion of the rotary seal ring 6, a pair of O-ring grooves 21 formed in an outer circumferential portion of the rotary seal ring 6, a pair of O-rings 22 engaged in the O-ring grooves 21 and slightly spaced from each other in the axial direction, an annular space 23 formed between the opposed circumferential surfaces of the rotary seal ring 6 and the holder portion 13 of the spring retainer 5 and sealed by the O-rings 22.

The O-rings 22 are formed of a non-compressive, elastic material like synthetic rubber and natural rubber. The O-rings 22 are properly pressed between the O-ring groove bottoms 21a of the O-ring grooves 21 and an inner circumferential surface 13a of the holder portion 13 (to the extent that the rotary seal ring 6 is not prevented from moving in the axial direction), and the annular space 23 is sealed on the two end portions in the axial direction. In this example, said O-rings 22, the other O-ring 14, and said O-ring 20 may be made of Viton®. Respective seal gas leading passages 24 pass through the rotary seal ring 6 as shown in FIG.1 and FIG.2, each having one end 24a opening into the seal end face 6a and another end 24b opening into the annular space 23.

The one open ends 24a of the respective seal gas leading passages 24 are circular and positioned exactly opposite to the static pressure-generating grooves 15 as shown in FIG.2 and FIG.4. The diameter D (to be exact, the length in the radial direction of the rotary seal ring 6) is set at the same as or slightly smaller than the groove width W (width W of the arc-shaped recessed groove 15a) of the static pressure-generating grooves 15, that is D s W. The other open ends 24b of the respective seal gas leading passages 24 are situated between the O-ring grooves 21, that is, between the O-rings 22. In this example, the same number of seal gas leading passages 24 as the arc-shaped recessed grooves 15a, that is, four passages 24, are provided at the same interval in the circumferential direction of the rotary seal ring 6. In other words, those ends 24a and 24b open onto the seal end face 6a and on the outer circumferential surface of the rotary seal ring 6 at positions at the same interval in the circumferential direction of the rotary seal ring 6.

In the non-contact-type, mechanical seal 1 provided with the vibration-preventing device 10, the gap between the seal end faces 3a and 6a is kept in the correct non-contacting state by the seal gas 8 supplied to the static pressure-generating grooves 15, and at the same time the annular space 23 is maintained at the same pressure as that between the stationary seal end faces 3a, 6a by leading the seal gas 8 into the annular space 23 through the seal gas leading passages 24. Therefore, the respective O-rings 22 are pressed against inner transverse walls 21b in the annular space 23 by the seal gas 8 and compressed in the axial direction of the rotary seal end face 6a. The respective O-rings 22 are made of a non-compressive (isovolumetric) elastic material, and that increases the pressing force of the respective O-rings 22 against the outer circumferential surface (the bottoms 21a of the O-ring grooves 21) of the rotary seal ring 6 and the opposite inner circumferential surface 13a of the holder portion 13 of the spring retainer 5. As a result, the rotary seal ring 6 is firmly held on the inner circumferential surface of the holder portion 13 of the spring retainer 5 by O-rings 22.

Therefore, no or substantially no pneumatic hammer or self-excited vibration will be caused on the rotary seal ring 6. Thus, the rotary seal ring 6 is kept from vibrating and making a vibrating noise.

The present invention can also be suitably applied to a non-contact-type, mechanical seal of such a construction that the outer circumferential area of the relatively rotating parts of the stationary seal end faces 3a, 6a is the region for sealed fluid, while the inner circumferential area is the atmospheric region.

## Claims

1. A non-contact mechanical seal for making a substantially fluid-tight seal around a rotatory shaft (4); said seal comprising a seal case (2); a rotatory shaft (4) that extends through said seal case (2) and is adapted for rotation in relation thereto; a first stationary sealing ring (3) having a first sealing face (3a), which first sealing ring (3) is fixedly secured within said seal case (2) around said shaft (4); spring retaining means (5) fixedly secured to said shaft (4); a second rotatory sealing ring (6) having a second sealing face (6a) that opposes said first sealing face (3a), which second sealing ring (6) is mounted over said shaft (4) between the first stationary seal ring (3) and said spring retaining means (5); connecting means (5, 150, 160) for connecting said second sealing ring (6) to said shaft (4) for rotation therewith whilst allowing said second sealing ring (6) to move axially with respect to said shaft (4); spring means (7) between said spring retaining means (5) and said second sealing ring (6) for urging the second sealing face (6a) towards said first sealing face; (3a) secondary sealing means (14) for sealing between the second sealing ring (6) and said shaft (4); and means (15-19) for admitting a sealing fluid (8) between said first and second sealing faces (3a, 6a) at a pressure greater than the pressure of the fluid to be sealed, whereby said sealing fluid urges said first and second sealing faces (3a,6a) apart against the action of said spring means (7) and seals the space between said first and second sealing faces (3a, 6a); **characterised by** a sleeve member (13) that is connected to said shaft (4) for rotation therewith and is disposed around the second sealing ring (6); two axially spaced, elastic sealing ring members (22) positioned between said sleeve member (13) and said second sealing ring (6) for sealing therebetween, which sealing ring members (22) define an annular space (23) between said sleeve member (13) and said second sealing ring (6); abutment means (21a) on said second sealing ring (6) and associated with each of said elastic sealing ring members (22) and adapted to prevent axial movement of said elastic sealing members (22) away from each other relative to said second sealing ring (6); and means (24) for admitting a pressurised sealing fluid into said annular space (23) for compressing said elastic sealing ring members (22) axially, thereby to expand said sealing ring members (22) radially, thereby holding said second sealing ring (6) firmly within said sleeve member (13) to reduce substantially pneumatic hammering of said second sealing ring (6).

2. A non-contact mechanical seal as claimed in claim 1, **characterised in that** said means for admitting pressurised sealing fluid into said annular space comprise means (24) for conducting sealing fluid from said space between said first and second sealing faces to said annular space (23).

3. A non-contact mechanical seal as claimed in claim 2, **characterised in that** said second sealing ring (6) is provided with a plurality of fluid conducting passages (24) each of which extends between a first open end (24a) that opens onto said second sealing face and a second open end that opens into said annular space.

4. A non-contact mechanical seal as claimed in claim 1, claim 2 or claim 3, **characterised in that** said means for admitting a sealing fluid between said first and second sealing faces comprise a plenum (16) between said seal case and said first sealing ring, means (17) for supplying said sealing fluid through the seal case to said plenum, and means (18) for conducting said fluid through the first ring from said plenum (16) to a plurality of openings (18a) formed in said first sealing face.

5. A non-contact mechanical seal as claimed in claim 4, **characterised in that** said first sealing face comprises one or more pressure generating grooves (15).

6. A non-contact mechanical seal as claimed in claim 5, **characterised in that** the or each groove (15) is circular or arc-shaped and is formed substantially concentrically with the first sealing face.

7. A non-contact mechanical seal as claimed in claim 5 or claim 6,
**characterised by** a plurality of arc-shaped, concentric pressure generating grooves (15a) which all have substantially the same radius and are arranged end-to-end to form a discontinuous annulus.

8. A non-contact mechanical seal as claimed in claim 7, **characterised in that** the distance (L) between adjacent grooves is substantially the same as the width of each groove in the radial direction.

9. A non-contact mechanical seal as claimed in any of claims 5 to 8, **characterised in that** said means (18) for conducting sealing fluid through the first ring communicate with each of said grooves (15a).

10. A non-contact mechanical seal as claimed in any of claims 5 to 9, **characterised in that** the first open end (24a) of each passageway (24) through the second rotatory sealing ring (6) is aligned with the or each groove (15) in the first sealing face (3a) of the first sealing ring (3).

11. A non-contact mechanical seal as claimed in claim 10, **characterised in that** the width in the radial direction of the first open end (24a) of each passageway (24) through the second sealing ring (6) is substantially the same as or is smaller than the width (W) of the grooves (15a) in the radial direction.

12. A non-contact mechanical seal as claimed in any of claims 4 to 11,
**characterised in that** said plenum (16) is connected to said means (18) for conducting fluid through the first ring by constriction means (19), such as an orifice, capillary or porous material.

13. A non-contact mechanical seal as claimed in any preceding claim,
**characterised in that** said means (15-19) for admitting sealing fluid between said first and second sealing faces are adapted to provide sealing fluid between said sealing faces (3a, 6a) at a pressure of about 0.5 - 1.5 bar greater than the pressure of the fluid to be sealed.

14. A non-contact mechanical seal as claimed in any preceding claim, **characterised in that** said means (15-19) for admitting sealing fluid between said first and second sealing faces are adapted to supply said sealing fluid at a pressure of about 1.0 - 3.0 bar greater than the pressure of the fluid to be sealed.

15. A non-contact mechanical seal as claimed in any preceding claim, **characterised in that** said elastic sealing ring members (22) are made from a non-compressible, elastic material selected from natural or synthetic rubbers.

16. A non-contact, mechanical seal as claimed in any preceding claim,
**characterised in that** said abutment means comprise two axially spaced, opposing, transverse walls (21b) formed on said second ring (16), wherein each wall (21b) is adapted to abut a respective arc of said elastic ring members (22).

## Patentansprüche

1. Eine berührungsfreie mechanische Dichtung zum Erzeugen einer im Wesentlichen flüssigkeitsdichten Dichtung um eine Drehwelle (4), während die Dichtung umfasst:
ein Dichtungsgehäuse (2),
eine sich durch das Dichtungsgehäuse (2) erstreckende Drehwelle (4), die angepasst ist, um im Bezug dazu zu drehen,
einen ersten ortsfesten Dichtungsring (3) mit einer ersten Dichtfläche (3a), während der erste Dichtungsring (3) fest innerhalb des Dichtungsgehäuses (2) um die Welle (4) befestigt ist,
fest mit der Welle (4) verbundene Federhaltemittel (5),
einen zweiten drehenden Dichtungsring (6) mit einer zweiten der ersten Dichtfläche (3a) gegenüberliegenden Dichtfläche (6a), während der zweite Dichtungsring (6) über die Welle (4) zwischen dem ersten ortsfesten Dichtungsring (3) und den Federhaltemitteln (5) befestigt ist,
Verbindungsmittel (5, 150, 160) zum Verbinden des zweiten Dichtungsrings (6) mit der Welle (4) zur Drehung damit, während es dem zweiten Dichtungsring (6) gestattet ist, sich axial in Bezug auf die Welle (4) zu bewegen,
Federmittel (7) zwischen den Federhaltemitteln (5) und dem zweiten Dichtungsring (6) zum Vorspannen der zweiten Dichtfläche (6a) in Richtung der ersten Dichtfläche (3a), sekundäre Dichtmittel (14) zum Abdichten zwischen dem zweiten Dichtungsring (6) und der Welle (4),
sowie Mittel (15-19) zum Einlassen einer Dichtflüssigkeit (8) zwischen die ersten und zweiten Dichtflächen (3a, 6a) bei einem größeren Druck als der Druck der zu dichtenden Flüssigkeit, wodurch die Dichtflüssigkeit die ersten und zweiten Dichtflächen (3a, 6a) entgegen der Wirkung der Federmittel (7) auseinandertreibt und den Raum zwischen den ersten und zweiten Dichtflächen (3a, 6a) abdichtet,
**gekennzeichnet durch** ein mit der Welle (4) zur Drehung damit verbundenes und um den zweiten Dichtring (6) angeordnetes Muffenelement (13), während
zwei axial beabstandete elastische Dichtungsringelemente (22) zwischen dem Muffenelement (13) und dem zweiten Dichtungsring (6) zum Dichten dazwischen angeordnet sind, wobei die Dichtungsringelemente (22) einen ringförmigen Raum (23) zwischen dem Muffenelement (13) und dem zweiten Dichtungsring (6) definieren, während
Widerlagemittel (21a) auf dem zweiten Dichtungsring (6) angeordnet, mit jedem der elastischen Dichtungsringelemente (22) verbunden und angepasst sind, um eine axiale Bewegung der elastischen Dichtungselemente (22) voneinander weg in Bezug auf den zweiten Dichtungsring (6) zu verhindern, sowie
Mittel (24) zum Einlassen einer unter Druck gesetzten Dichtflüssigkeit in den ringförmigen Raum (23) zum axialen Komprimieren der elastischen Dichtungsringelemente (22), wodurch sich die Dichtungsringelemente (22) radial ausdehnen und wodurch der zweite Dichtungsring (6) fest innerhalb des Muffenelements (13) gehalten ist, um im Wesentlichen ein pneumatisches Hämmern des zweiten Dichtungsrings (6) zu reduzieren.

2. Eine berührungsfreie mechanische Dichtung gemäß Anspruch 1, **dadurch gekennzeichnet, dass** die Mittel zum Einlassen der unter Druck gesetzten Dichtflüssigkeit in den ringförmigen Raum Mittel (24) zum Leiten der Dichtflüssigkeit von dem Raum zwischen der ersten und zweiten Dichtfläche zu dem ringförmigen Raum (23) umfassen.

3. Eine berührungsfreie mechanische Dichtung gemäß Anspruch 2, **dadurch gekennzeichnet, dass** der zweite Dichtungsring (6) mit einer Mehrzahl von flüssigkeitleitenden Bereichen (24) bereitgestellt ist, von denen sich jeder zwischen einem ersten offenen Ende (24a), das auf die zweite Dichtfläche öffnet, und einem zweiten offenen Ende, das in den ringförmigen Raum öffnet, erstreckt.

4. Eine berührungsfreie mechanische Dichtung gemäß Anspruch 1, 2 oder 3, **dadurch gekennzeichnet, dass** die Mittel zum Einlassen einer Dichtflüssigkeit zwischen die ersten und zweiten Dichtflächen umfassen:
einen ausgefüllten Raum (16) zwischen dem Dichtungsgehäuse und dem ersten Dichtungsring,
Mittel (17) zum Liefern der Dichtflüssigkeit durch das Dichtungsgehäuse zu dem ausgefüllten Raum, und
Mittel (18) zum Leiten der Flüssigkeit durch den ersten Ring von dem ausgefüllten Raum (16) zu einer Mehrzahl von in der ersten Dichtfläche ausgebildeten Öffnungen (18).

5. Eine berührungsfreie mechanische Dichtung gemäß Anspruch 4, **dadurch gekennzeichnet, dass** die erste Dichtfläche eine oder mehrere Druck erzeugende Rillen (15) umfasst.

6. Eine berührungsfreie mechanische Dichtung gemäß Anspruch 5, **dadurch gekennzeichnet, dass** die oder jede Rille (15) kreisförmig oder bogenförmig sowie im Wesentlichen konzentrisch mit der ersten Dichtfläche ausgebildet ist.

7. Eine berührungsfreie mechanische Dichtung gemäß Anspruch 5 oder 6, **gekennzeichnet durch** eine Mehrzahl von bogenförmigen, konzentrischen Druck erzeugenden Rillen (15a), die alle im Wesentlichen denselben Radius aufweisen und hintereinander angeordnet sind, um einen unterbrochenen Kreisring zu bilden.

8. Eine berührungsfreie mechanische Dichtung gemäß Anspruch 7, **dadurch gekennzeichnet, dass** der Abstand (L) zwischen benachbarten Rillen im Wesentlichen gleich der Breite in der radialen Richtung jeder Rille ist.

9. Eine berührungsfreie mechanische Dichtung gemäß einem der Ansprüche 5 bis 8, **dadurch gekennzeichnet, dass** die Mittel (18) zum Leiten der Dichtflüssigkeit durch den ersten Ring mit jeder der Rillen (15a) in Verbindung stehen.

10. Eine berührungsfreie mechanische Dichtung gemäß einem der Ansprüche 5 bis 9, **dadurch gekennzeichnet, dass** das erste offene Ende (24a) jedes Durchgangs (24) durch den zweiten drehenden Dichtungsring (6) mit der oder jeder Rille (15) in der ersten Dichtfläche (3a) des ersten Dichtungsrings (3) ausgerichtet ist.

11. Eine berührungsfreie mechanische Dichtung gemäß Anspruch 10, **dadurch gekennzeichnet, dass** die Breite des ersten offenen Endes (24a) jedes Durchgangs (24) durch den zweiten Dichtungsring (6) in der radialen Richtung im Wesentlichen gleich oder kleiner als die Breite (W) der Rillen (15a) in der radialen Richtung ist.

12. Eine berührungsfreie mechanische Dichtung gemäß einem der Ansprüche 4 bis 11, **dadurch gekennzeichnet, dass** der ausgefüllte Raum (16) mit den Mitteln (18) zum Leiten der Flüssigkeit durch den ersten Ring durch Einschnürungsmittel (19) verbunden ist, wie beispielsweise eine Öffnung oder ein kapillares oder poröses Material.

13. Eine berührungsfreie mechanische Dichtung gemäß einem der vorhergehenden Ansprüche, **dadurch gekennzeichnet, dass** die Mittel (15-19) zum Einlassen der Dichtflüssigkeit zwischen die ersten und zweiten Dichtflächen angepasst sind, um Dichtflüssigkeit zwischen den Dichtflächen (3a, 6a) bei einem Druck von ungefähr 0,5 bis 1,5 bar über dem Druck der abzudichtenden Flüssigkeit bereitzustellen.

14. Eine berührungsfreie mechanische Dichtung gemäß einem der vorhergehenden Ansprüche, **dadurch gekennzeichnet, dass** die Mittel (15-19) zum Einlassen der Dichtflüssigkeit zwischen die ersten und zweiten Dichtflächen angepasst sind, um die Dichtflüssigkeit bei einem Druck von ungefähr 1,0 bis 3,0 bar über dem Druck der abzudichtenden Flüssigkeit bereitzustellen.

15. Eine berührungsfreie mechanische Dichtung gemäß einem der vorhergehenden Ansprüche, **dadurch gekennzeichnet**, das die elastischen Dichtungsringelemente (22) aus einem nicht komprimierbaren elastischen Material hergestellt sind, das ausgewählt ist aus Natur- oder Kunstgummi.

16. Eine berührungsfreie mechanische Dichtung gemäß einem der vorhergehenden Ansprüche, **dadurch gekennzeichnet, dass** die Widerlagemittel zwei axial beabstandete sich gegenüberliegende quer verlaufende auf dem zweiten Ring (16) ausgebildete Wände (21b) aufweisen, wobei jede Wand (21b) angepasst ist, um an einem entsprechenden Bogen des elastischen Ringelements (22) anzuliegen.

## Revendications

1. Joint mécanique sans contact pour réaliser un joint sensiblement étanche aux fluides autour d'un arbre rotatif (4) ; le joint comprenant un carter de joint (2) ; un arbre rotatif (4) qui s'étend à travers ledit carter de joint (2) et qui est adapté pour tourner en relation avec celui-ci ; une première bague d'étanchéité (3) fixe comportant une première face d'étanchéité (3a), laquelle première bague d'étanchéité (3) est fixée fermement dans ledit carter de joint (2) autour dudit arbre (4) ; des moyens de retenue élastiques (5) fixés fermement audit arbre (4) ; une deuxième bague d'étanchéité (6) rotative comportant une deuxième face d'étanchéité (6a) opposée à ladite première face d'étanchéité (3a), laquelle deuxième bague d'étanchéité (6) est montée sur ledit arbre (4) entre la première bague d'étanchéité (3) fixe et lesdits moyens de retenue élastiques (5) ; des moyens de liaison (5, 150, 160) pour relier ladite deuxième bague d'étanchéité (6) audit arbre (4) pour qu'elle tourne avec celui-ci tout en permettant à ladite deuxième bague d'étanchéité (6) de se déplacer axialement par rapport audit arbre (4) ; des moyens formant ressort (7) entre lesdits moyens de retenue élastiques (5) et ladite deuxième bague d'étanchéité (6) pour pousser la deuxième face d'étanchéité (6a) vers ladite première face d'étanchéité (3a) ; des moyens d'étanchéité secondaires (14) pour réaliser l'étanchéité entre la deuxième bague d'étanchéité (6) et ledit arbre (4) ; et des moyens (15 à 19) pour admettre un fluide d'étanchéité (8) entre lesdites première et deuxième faces d'étanchéité (3a, 6a) à une pression supérieure à la pression du fluide à enfermer hermétiquement, moyennant quoi ledit fluide d'étanchéité pousse lesdites première et deuxième faces d'étanchéité (3a, 6a) à l'opposé l'une de l'autre contre l'action desdits moyens formant ressort (7) et réalise l'étanchéité de l'espace entre lesdites première et deuxième faces d'étanchéité (3a, 6a) ; **caractérisé par** un élément formant manchon (13) qui est relié audit arbre (4) pour tourner avec celui-ci et qui est disposé autour de la deuxième bague d'étanchéité (6) ; deux éléments formant bague d'étanchéité élastiques (22), espacés axialement, positionnés entre ledit élément formant manchon (13) et ladite deuxième bague d'étanchéité (6) pour réaliser l'étanchéité entre eux, lesquels éléments formant bague d'étanchéité (22) définissent un espace annulaire (23) entre ledit élément formant manchon (13) et ladite deuxième bague d'étanchéité (6) ; des moyens formant butée (21a) sur ladite deuxième bague d'étanchéité (6) et associés à chacun desdits éléments formant bague d'étanchéité élastiques (22) et adaptés pour empêcher un mouvement axial desdits éléments d'étanchéité (22) élastiques à l'opposé l'un de l'autre par rapport à ladite deuxième bague d'étanchéité (6) ; et des moyens (24) pour admettre un fluide d'étanchéité sous pression dans ledit espace annulaire (23) pour comprimer lesdits éléments formant bague d'étanchéité élastiques (22) axialement, pour étendre de ce fait lesdits éléments formant bague d'étanchéité (22) radialement, maintenant de ce fait ladite deuxième bague d'étanchéité (6) fermement dans ledit élément formant manchon (13) pour réduire sensiblement le martelage pneumatique de ladite deuxième bague d'étanchéité (6).

2. Joint mécanique sans contact selon la revendication 1, **caractérisé en ce que** lesdits moyens pour admettre un fluide d'étanchéité sous pression dans ledit espace annulaire comprennent des moyens (24) pour conduire le fluide d'étanchéité dudit espace entre lesdites première et deuxième faces d'étanchéité vers ledit espace annulaire (23).

3. Joint mécanique sans contact selon la revendication 2, **caractérisé en ce que** ladite deuxième bague d'étanchéité (6) est pourvue d'une pluralité de passages de conduite de fluide (24) qui s'étendent chacun entre une première extrémité ouverte (24a) qui s'ouvre sur ladite deuxième face d'étanchéité et une deuxième extrémité ouverte qui s'ouvre dans ledit espace annulaire.

4. Joint mécanique sans contact selon la revendication 1, la revendication 2 ou la revendication 3, **caractérisé en ce que** lesdits moyens pour admettre un fluide d'étanchéité entre lesdites première et deuxième faces d'étanchéité comprennent un plenum (16) entre ledit carter de joint et ladite première bague d'étanchéité, des moyens (17) pour fournir ledit fluide d'étanchéité à travers le carter d'étanchéité audit plenum, et des moyens (18) pour conduire ledit fluide à travers la première bague, dudit plenum (16) vers une pluralité d'ouvertures (18a) formées dans ladite première face d'étanchéité.

5. Joint mécanique sans contact selon la revendication 4**, caractérisé en ce que** ladite première face d'étanchéité comprend une ou plusieurs rainures de génération de pression (15).

6. Joint mécanique sans contact selon la revendication 5, **caractérisé en ce que** la ou chaque rainure (15) est circulaire ou en forme d'arc et est formée sensiblement concentriquement avec la première face d'étanchéité.

7. Joint mécanique sans contact selon la revendication 5 ou la revendication 6, **caractérisé par** une pluralité de rainures de génération de pression (15a) concentriques en forme d'arcs qui ont toutes sensiblement le même rayon et qui sont agencées bout à bout pour former un anneau discontinu.

8. Joint mécanique sans contact selon la revendication 7, **caractérisé en ce que** la distance (L) entre des rainures adjacentes est sensiblement égale à la largeur de chaque rainure dans la direction radiale.

9. Joint mécanique sans contact selon l'une quelconque des revendications 5 à 8, **caractérisé en ce que** lesdits moyens (18) pour conduire un fluide d'étanchéité à travers la première bague communiquent avec chacune desdites rainures (15a).

10. Joint mécanique sans contact selon l'une quelconque des revendications 5 à 9, **caractérisé en ce que** la première extrémité ouverte (24a) de chaque passage (24) à travers la deuxième bague d'étanchéité (6) rotative est alignée avec la ou chaque rainure (15) dans la première face d'étanchéité (3a) de la première bague d'étanchéité (3).

11. Joint mécanique sans contact selon la revendication 10, **caractérisé en ce que** la largeur dans la direction radiale de la première extrémité ouverte (24a) de chaque passage (24) à travers la deuxième bague d'étanchéité (6) est sensiblement égale ou est inférieure à la largeur (W) des rainures (15a) dans la direction radiale.

12. Joint mécanique sans contact selon l'une quelconque des revendications 4 à 11, **caractérisé en ce que** ledit plenum (16) est relié auxdits moyens (18) pour conduire un fluide à travers la première bague par des moyens de constriction (19), tels qu'un orifice, un capillaire ou un matériau poreux.

13. Joint mécanique sans contact selon l'une quelconque des revendications précédentes, **caractérisé en ce que** lesdits moyens (15 à 19) pour admettre un fluide d'étanchéité entre lesdites première et deuxième faces d'étanchéité sont adaptés pour fournir un fluide d'étanchéité entre lesdites faces d'étanchéité (3a, 6a) à une pression supérieure d'environ 0,5 à 1,5 bar à la pression du fluide devant être enfermé hermétiquement.

14. Joint mécanique sans contact selon l'une quelconque des revendications précédentes, **caractérisé en ce que** lesdits moyens (15 à 19) pour admettre un fluide d'étanchéité entre lesdites première et deuxième faces d'étanchéité sont adaptés pour fournir ledit fluide d'étanchéité à une pression supérieure d'environ 1,0 à 3,0 bars à la pression du fluide devant être enfermé hermétiquement.

15. Joint mécanique sans contact selon l'une quelconque des revendications précédentes, **caractérisé en ce que** lesdits éléments formant bague d'étanchéité élastiques (22) sont réalisés à partir d'un matériau élastique non compressible sélectionné parmi des caoutchoucs naturels ou synthétiques.

16. Joint mécanique sans contact selon l'une quelconque des revendications précédentes, **caractérisé en ce que** lesdits moyens formant butée comprennent deux parois transversales (21b) opposées espacées axialement formées sur ladite deuxième bague (16), dans lequel chaque paroi (21b) est adaptée pour être en butée avec un arc respectif desdits éléments formant bagues élastiques (22).
